# EUROPÄISCHE PATENTSCHRIFT

(11) **EP 4 008 420 B1**
(45) Veröffentlichungstag und Bekanntmachung des Hinweises auf die Patenterteilung: **28.01.2026**
(21) Anmeldenummer: 20211944.2
(22) Anmeldetag: 04.12.2020
(51) Int. Cl.: B01D 33/073, B01D 33/60, B01D 33/80

(54) **VERFAHREN UND VORRICHTUNG ZUM WASCHEN EINES FILTERKUCHENS AUF EINEM FILTERMEDIUM**
METHOD AND DEVICE FOR WASHING A FILTER CAKE ON A FILTER MEDIUM
PROCÉDÉ ET APPAREIL DE LAVAGE D'UN GÂTEAU DE FILTRATION SUR UN MOYEN DE FILTRATION

(43) Veröffentlichungstag der Anmeldung: 08.06.2022
(73) Patentinhaber: Bokela GmbH, 76131 Karlsruhe (DE)
(72) Erfinder: HEINLEIN, Jens, 76137 Karlsruhe (DE); BRUDER, Ralf, 77797 Ohlsbach (DE); EHRFELD, Egon, 76227 Karlsruhe (DE)
(74) Vertreter: Wunderlich & Heim Patentanwälte PartG mbB

(56) Entgegenhaltungen:
- EP-A1- 3 556 447
- GB-A- 2 280 857
- US-A- 3 791 525
- US-A- 3 943 233

## Beschreibung

Die Erfindung betrifft ein Verfahren zum Waschen eines Filterkuchens auf einem Filtermedium, an welchem der Filterkuchen aus einer Suspension anfiltriert wird, wobei der Filterkuchen ein Haufwerk aus Feststoffpartikeln mit verbliebener Mutterflüssigkeit bildet, und zum Waschen zumindest ein Bereich des Filterkuchens auf einer Oberseite, welche von dem Filtermedium abgewandt ist, mit einem Waschfluid beaufschlagt wird, welches aufgrund einer anliegenden Druckdifferenz zum Filterkuchen von der Oberseite zum Filtermedium hin wandert und dabei verbliebene Mutterflüssigkeit zum Filtermedium hin austreibt und an einer Filtratseite hinter dem Filtermedium als Waschfiltrat abströmt, gemäß dem Oberbegriff des Anspruchs 1.

Weiterhin betrifft die Erfindung eine Vorrichtung zum Waschen eines Filterkuchens auf einem Filtermedium, wobei der Filterkuchen aus einer Suspension als ein Haufwerk aus Feststoffpartikeln mit verbliebener Mutterflüssigkeit an dem Filtermedium anfiltriert ist und eine Zuführeinrichtung zum Zuführen eines Waschfluides zum Waschen zumindest eines Bereiches des Filterkuchens auf einer Oberseite vorgesehen ist, welche von dem Filtermedium abgewandt ist, wobei an dem Filtermedium eine Druckdifferenz eingestellt ist, aufgrund welcher das Waschfluid den Filterkuchen von der Oberseite zum Filtermedium hin durchwandert und dabei verbliebende Mutterflüssigkeit zum Filtermedium hin austreibt und mittels einer Abführleitung an einer Filtratseite hinter dem Filtermedium Waschfiltrat abführbar ist, gemäß dem Oberbegriff des Anspruchs 7.

Ein gattungsgemäßes Verfahren und eine gattungsgemäße Vorrichtung gehen beispielsweise aus der EP 3 098 215 A1 oder der EP 3 556 447 A1 hervor. Eine ähnliche Vorrichtung ist ferner aus der US 3 943 233 A bekannt.

Die Waschung eines Filterkuchens erfolgt meist durch Aufsprühen einer Waschflüssigkeit auf die Kuchenoberfläche, nachdem ein anfiltrierter Filterkuchen aus einem Filtrationsbereich heraustritt. Aufgrund einer Druckdifferenz wird Flüssigkeit in Richtung einer inneren Filterzelle eingesaugt. Dabei wird die Porenflüssigkeit, auch Mutterflüssigkeit genannt, teilweise von der aufgesprühten Waschflüssigkeit kolbenartig herausgedrückt. Im weiteren Verlauf der Waschung mischt sich die Waschflüssigkeit mit der Mutterflüssigkeit, so dass eine Mischung aus Waschflüssigkeit und Porenfiltrat anfällt. Zwischen Kuchenbildung und Waschung sowie bei einer mehrfachen Waschung zwischen den Waschungen soll in den meisten Fällen eine Kuchenporenentleerung durch Eindringen von Gas - in der Regel Luft - erfolgen, bevor die nächste Waschung startet. Diese teilweise Entleerung der Kuchenporen ist oft erwünscht und kann den Wascheffekt verbessern.

Die Wirtschaftlichkeit des Waschverfahrens ist dabei von verschiedenen Aspekten abhängig, so von einer Bewerkstelligung der Waschaufgabe, also der Erzielung des Waschziels, von einer Einsparung von Waschflüssigkeit zum Erreichen der geforderten Reinheit und/oder von einer möglichst geringen Vermischung von Waschflüssigkeit und Mutterflüssigkeit, weil die Filtrate ansonsten aufwändig nachbehandelt werden müssen.

Der Erfindung liegt die **Auf**g**abe** zugrunde, ein besonders effizientes Verfahren und eine besonders effiziente Vorrichtung zum Waschen eines Filterkuchens auf einem Filtermedium anzugeben.

Die Aufgabe wird zum einen durch ein Verfahren mit den Merkmalen des Anspruchs 1 und zum anderen durch eine Vorrichtung mit den Merkmalen des Anspruchs 7 gelöst. Bevorzugte Ausführungsformen der Erfindung sind in den abhängigen Ansprüchen angegeben.

Das erfindungsgemäße Verfahren ist dadurch gekennzeichnet,
dass das Filtermedium umlaufend angetrieben und ein kontinuierlicher Filtrations- und Waschvorgang durchgeführt werden,
dass der Waschbereich in mehrere voneinander getrennte Abschnitte unterteilt und in einem druckdichten Gehäuse angeordnet ist,
dass beim Waschen als Regelgröße durch die Messeinrichtung ein Volumenstrom des Waschfiltrats (30) und/oder ein Gasdurchschlag durch den Filterkuchen (5) erfasst werden,
wobei eine Steuerung einer Filterzellenfüllung beziehungsweise eine Filterzellenentleerung über eine Mengenbilanz erfolgt und die Waschung so geregelt wird, dass eine Untersättigung des Filterkuchens erzielt wird,
wobei durch zuvor gemessene Filtrationsdaten ermittelt ist, wieviel Filtrat der Filterkuchen bei vollständiger Sättigung maximal fassen kann.

Ein Aspekt der Erfindung liegt in einer kontrollierten oder geregelten Waschung des Filterkuchens auf dem Filtermedium. Für die Regelung wird als Regelgröße eine Messgröße vorgesehen, welche hinreichend genau gemessen werden kann. Zur Regelung oder zur Überwachung wird zu dem abströmenden Waschfiltrat über mindestens eine Messeinrichtung mindestens eine Messgröße als Regelgröße erfasst. Das Waschfiltrat stellt dabei das beim Waschen verdrängte Filtrat dar, welches verdrängte Mutterflüssigkeit aus den Poren des Filterkuchens und gegebenenfalls aus dem Kuchen ausströmendes Waschfluid, insbesondere Waschflüssigkeit, oder eine Mischung aus Mutterflüssigkeit und Waschfluid, umfasst. Über die Steuereinrichtung kann abhängig von dieser mindestens einen gemessenen Regelgröße mindestens ein Waschparameter als Führungsgröße in dem Verfahren geändert und eingestellt werden. Hierdurch lässt sich ein besonders effizientes Waschergebnis erzielen. Erfindungsgemäß wird die Waschung so geregelt, dass eine gewisse Untersättigung des Filterkuchens von etwa 5 bis 10% erzielt wird.

Besonders bevorzugt ist es nach einer Weiterbildung der Erfindung, dass beim Waschen als Regelgröße durch die Messeinrichtung eine Menge des Waschfiltrats, ein Volumenstrom des Waschfiltrats, eine Zusammensetzung des Waschfiltrats und/oder ein Gasdurchschlag durch den Filterkuchen erfasst werden.

Nach einer Erkenntnis der Erfindung lassen sich die Filtratmenge in einzelnen Verfahrenszonen, eine Waschflüssigkeitsmenge, eine Trommeldrehzahl sowie eine Druckdifferenz in den einzelnen Waschzonen relativ genau messen. Problematisch hingegen ist die Messung einer Restkuchenfeuchte, ein Grad an Filterzellenfüllung und eine Analyse der Kuchenoberfläche. Allerdings kann eine Menge des Waschfiltrats und ein Volumenstrom des abströmenden Waschfiltrats durch entsprechende Messeinrichtungen, etwa einem Durchflussmesser einschließlich von Änderungen hierzu, sehr genau gemessen werden, etwa mittels eines Durchflussmessers.

Auch die Zusammensetzung eines Waschfiltrats aus Mutterflüssigkeit und Waschfluid, insbesondere einer Waschflüssigkeit, kann über entsprechende Analyseeinrichtungen schnell und genau ermittelt werden. Dabei kann auch ein Anteil an Gas als Teil des Waschfluides und damit ein Gasdurchschlag durch den Filterkuchen ebenso genau ermittelt werden.

Zur Einstellung des Waschprozesses können verschiedene Waschparameter als Führungsgröße verstellt werden. Besonders vorteilhaft ist es nach einer Weiterbildung der Erfindung, dass beim Waschen als Führungsgröße eine Druckdifferenz an dem Filtermedium und/oder eine Zuführung von Waschfluid vorgesehen werden. Diese beiden Waschparameter lassen sich schnell und sehr genau einstellen.

Eine Druckdifferenz am Filtermedium, also eine Druckdifferenz zwischen der Oberseite und der Unterseite am Filtermedium kann durch eine entsprechende Kompressionseinrichtung und/oder Unterdruckeinrichtung unmittelbar eingestellt und über eine Druckmesseinrichtung zuverlässig bestimmt werden. Auch kann die Zuführung von Waschfluid gezielt gesteuert werden, wobei die Menge an aufzusprühendem Waschfluid und/oder eine zusätzliche Einschaltung oder Abschaltung von Waschfluidzuführeinrichtungen durch die Steuereinrichtung schnell und gezielt einstellbar ist.

Hinsichtlich einer Änderung und Anpassung der Druckdifferenz ist es nach einer Weiterbildung der Erfindung vorgesehen, dass die Druckdifferenz am Filtermedium auf einer Oberseite und/oder einer Filtratseite eingestellt wird. Bei der Verwendung eines Druckfilters mit einem umgebenden Druckgehäuse kann ein Umgebungsdruck im Bereich des Filterkuchens frei eingestellt werden. Alternativ oder ergänzend kann über eine Unterdruckeinrichtung, etwa eine Vakuumpumpe, ein Unterdruck an der Filtratseite, also in einer Filterzelle der Filtrationsvorrichtung, eingestellt werden.

Eine bevorzugte Ausführungsvariante der Erfindung besteht weiter darin, dass als Führungsgröße zum Einstellen der Druckdifferenz eine Leistung einer Pumpe zum Abfördern des Waschfiltrats und/oder ein Drosselventil an einer Abführleitung für das Waschfiltrat verstellt werden. Durch das Verändern einer Leistung einer Pumpe zum Abfördern des Waschfiltrats kann gezielt die Druckdifferenz am Filtermedium verändert werden. Alternativ oder ergänzend zur Änderung einer Pumpenleistung kann auch an einer Abführleitung für das Waschfiltrat von einer Filterzelle weg ein Drosselventil vorgesehen sein, welches mittels einer Stelleinrichtung verstellbar ist. Hierdurch lässt sich ein Druckabfall am Drosselventil und damit auch eine Einstellung der Druckdifferenz am Filtermedium erzielen.

Ein besonders gutes Waschergebnis kann nach einer vorteilhaften Ausführungsform dadurch erzielt werden, dass das Waschen wiederholt an dem Filterkuchen durchgeführt wird.

Besonders vorteilhaft ist es dabei, dass das wiederholte Waschen als ein Gegenlauf-Waschen durchgeführt wird, bei dem das Waschfiltrat eines nachfolgenden Waschvorganges als ein Waschfluid zum Durchführen des Waschens bei einem vorausgehenden Waschvorgang verwendet wird. Hierdurch lässt sich Waschfluid besonders sparsam und effizient einsetzen. Eine Steuerung kann dabei für jeden einzelnen Waschvorgang, nur für bestimmte Waschvorgänge, insbesondere dem letzten Waschvorgang, oder für den Waschprozess insgesamt vorgesehen werden.

Die erfindungsgemäße Vorrichtung zum Waschen des Filterkuchens ist dadurch gekennzeichnet, dass eine Steuereinrichtung zum geregelten Steuern des Waschens abhängig von dem abströmenden Waschfiltrat vorgesehen ist, wobei mittels einer Messeinrichtung eine Messgröße als Regelgröße für ein geregeltes Waschen erfassbar und der Steuereinrichtung zuführbar ist, und dass die Steuereinrichtung ausgebildet ist, abhängig von der gemessenen Regelgröße des Waschfiltrats mindestens einen Waschparameter als Führungsgröße zu ändern.

Die erfindungsgemäße Vorrichtung ist insbesondere zur Durchführung des zuvor beschriebenen Verfahrens geeignet. Hierbei können die zuvor dargelegten Vorteile erzielt werden.

Besonders zweckmäßig ist es nach der Erfindung, dass das Filtermedium umlaufend angetrieben ist. Hierdurch kann insbesondere ein kontinuierlicher Filtrations- und Waschvorgang durchgeführt werden.

Weiterhin ist es nach einer Ausführungsvariante der Erfindung besonders vorteilhaft, dass die Vorrichtung ein druckdichtes Gehäuse aufweist, in welchem ein Filtrationsbereich und ein Waschbereich angeordnet sind. Insbesondere der Waschbereich kann in mehrere voneinander getrennte Abschnitte unterteilt sein. Die Abschnitte können dabei durch entsprechende Schleusen oder Trennwände voneinander getrennt sein. In dem druckdichten Gehäuse kann insbesondere ein Überdruck insgesamt oder bereichsweise eingestellt werden. Hierdurch lassen sich besonders effi zient Druckdifferenzen zur Durchführung des Filtrationsvorganges und insbesondere der Waschvorgänge einstellen.

Die erfindungsgemäße Vorrichtung weist einen Trommelfilter auf.

Die Steuerung/Überwachung der Zellenfüllung beziehungsweise -entleerung wird erfindungsgemäß über eine Mengenbilanz bewerkstelligt. Aus der Suspensionsmenge, Konzentration und Filterdrehzahl ist bekannt, wieviel Filterkuchen auf einem m² Filterfläche liegt beziehungsweise wie dick der Filterkuchen ist (Kuchenhöhe in mm). Mit den zuvor gemessenen Filtrationsdaten (zum Beispiel aus dem Labor die spezifische Kuchendichte beziehungsweise Porosität) kennt man hinreichend genau den Porenvolumenanteil des Filterkuchens. Das heißt es ist bekannt, wieviel Filtrat ein vollständig gesättigter Filterkuchen maximal fassen kann.

Zahlenbeispiel (alle Zahlen sind illustrativ und natürlich abhängig vom Stoffsystem und von der Betriebsweise):
Durch die Waschzone wird in einer Zeiteinheit 1 Tonne Kuchen gefördert (der Einfachheit halber Bezug auf trockenen Feststoff). Der Feststoff lässt sich aus dem Suspensionsvolumenstrom, der Suspensionskonzentration sowie aus der Filterdrehzahl ermitteln. Dieser Filterkuchen kann beispielsweise maximal 400 kg Filtrat enthalten (das ist hier eine Porensättigung S von 100%). Durch eine Entfeuchtung des Kuchens kann die Sättigung je nach Dauer auf S = 40 - 90% reduziert werden, nehmen wir einfach S = 60% an. S = 60% entsprechen dann 240 kg Porenfiltrat (bleibt im Kuchen) und 160 kg Flüssigkeit, die in der Filterzelle abfließt.

Auf diesen Filterkuchen wird von der Untersättigung beispielsweise eine Waschflüssigkeitsmenge von 500 kg gegeben (Waschverhältnis 0,5 = 500 kg/1.000 kg Feststoff). Das Filtrat enthält somit 500 kg Waschfiltrat ohne Entfeuchtung, und mit Entfeuchtung (S = 60%) 660 kg (also 500 kg + 160 kg). Es handelt sich bei dem Entfeuchtungsfiltrat (mit 160 kg) durchaus um einen merklichen Anteil, der ausreichend genau gemessen werden kann.

Anzumerken ist, dass es bei dieser Betrachtung weniger darum geht, eine exakte Sättigung auf das letzte Prozent einzustellen, sondern darum, dass eine Untersättigung stattfindet, die auf 5 - 10% genau vorhergesagt werden kann, zum Beispiel S = 60 oder 80% wäre in diesem Beispiel ausreichend. Hauptsache es kommt zu einer ausreichenden Porenentleerung, dann ist auch gesichert, dass die Waschflüssigkeit wirklich in den Kuchen eindringt anstatt oberflächlich abzufließen. Der eventuell entstehende Gasdurchsatz hilft bei der Zellenteilentleerung (Anmerkung: die Zelle kann durch den Gasdurchsatz teilentleert werden, man könnte die Zelle aber auch mit einem separaten Gasstrom, der gezielt über den Steuerkopf des Filters zugegeben wird, entleeren.

Es kann so eine (teilweise) Porenentleerung ohne exzessiven Gasdurchsatz sichergestellt werden.

Die Erfindung wird nachfolgend anhand von bevorzugten Ausführungsbeispielen weiter beschrieben, welche in den beigefügten Zeichnungen schematisch dargestellt sind. In den Zeichnungen zeigen:
- Fig. 1: eine Seitenansicht einer ersten erfindungsgemäßen Vorrichtung;
- Fig. 2: eine Darstellung einer zweiten erfindungsgemäßen Vorrichtung;
- Fit. 3: eine Darstellung einer dritten erfindungsgemäßen Vorrichtung;
- Fig. 4: eine alternative Steuerungsanordnung zur Vorrichtung von Fig. 3;
- Fig. 5: eine schematische Darstellung einer vierten erfindungsgemäßen Vorrichtung;
- Fig. 6: eine schematische Darstellung zu einer fünften Ausführungsform einer erfindungsgemäßen Vorrichtung in einem ersten Betriebszustand;
- Fig. 7: eine Darstellung der Vorrichtung von Fig. 6 in einem zweiten Betriebszustand; und
- Fig. 8: eine schematische Darstellung einer sechsten Ausführungsform einer erfindungsgemäßen Vorrichtung.

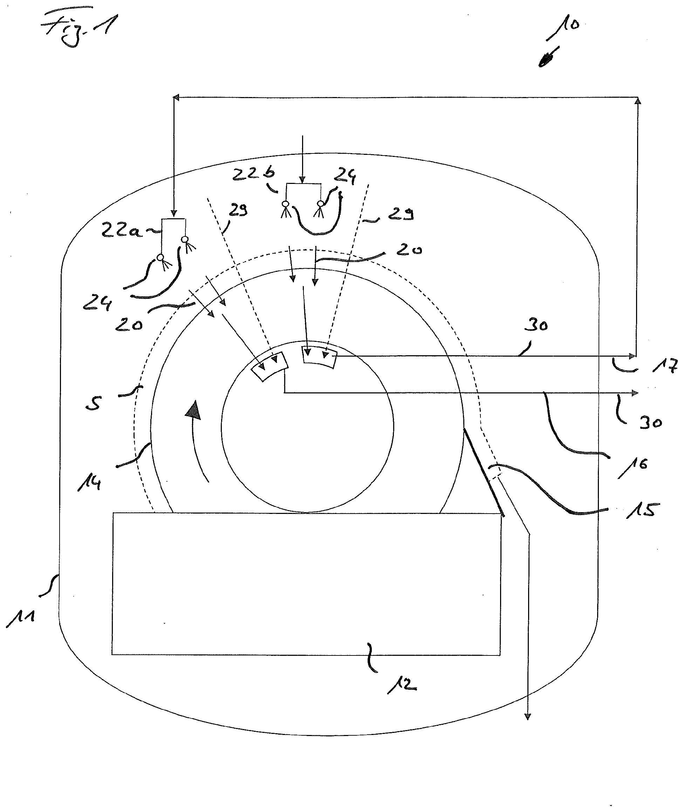

Gemäß Fig. 1 ist eine erste erfindungsgemäße Vorrichtung 10 als ein Trommelfilter mit einem Suspensionstrog 12 ausgebildet, in welchen teilweise eine drehend angetriebene Trommel mit einem zylindrisch angeordneten Filtermedium 14 in bekannter Weise eintaucht. Das Filtermedium 14 kann von einem Gehäuse 11 umgeben sein, welches als ein Druckgehäuse ausgebildet sein kann.

In grundsätzlich bekannter Weise wird aufgrund einer anliegenden Druckdifferenz an dem Filtermedium 14 beim Durchlauf durch den Suspensionstrog 12, welcher mit einer Suspension, also einer mit Feststoffpartikeln versetzten Mutterflüssigkeit, gefüllt ist, ein Filterkuchen 5 anfiltriert. Nach Austritt des Filtermediums 14 mit dem anfiltrierten Filterkuchen 5 aus der Suspension wird der Filterkuchen 5 gegebenenfalls nach einer Zwischenentfeuchtung einer Waschung unterzogen.

Im dargestellten Ausführungsbeispiel nach Fig. 1 sind zwei Waschstufen mit einer ersten Zuführeinrichtung 22a mit Düsen 24 zum Aufsprühen eines Waschfluides 20 auf den Filterkuchen 5 auf dem Filtermedium 14 und einer zweiten Zuführeinrichtung 22b angeordnet, welche ebenfalls mit Düsen 24 zum Aussprühen des Waschfluides 20 ausgebildet ist. Die Waschbereiche zwischen den zwei Zuführeinrichtungen 22a, 22b sowie zu angrenzenden Bereichen können über nicht dargestellte Trennwände 28 abgegrenzt sein.

Bei dem dargestellten Ausführungsbeispiel durchdringt das Waschfluid 20 aufgrund einer anliegenden Druckdifferenz am Filtermedium 14 den Filterkuchen 5 auf dem Filtermedium 14 und treibt dabei Mutterflüssigkeit aus dem Filterkuchen 5 zu einer inneren Filtratseite aus, wobei Waschfiltrat 30, welches eine Mischung aus Mutterflüssigkeit und Waschfluid 20 sein kann, über eine Abführleitung 16 abgeführt wird. Mit dem Waschfluid 20 kann auch Gas 29 in den Filterkuchen 5 eindringen.

In einer weiteren Waschstufe, welche der ersten Waschstufe grundsätzlich vor- oder nacheilen kann, wird über die zweite Zuführeinrichtung 22b Waschfluid 20 auf den Filterkuchen 5 aufgesprüht, wobei das dabei gebildete Waschfiltrat 30 über eine Rücklaufleitung 17 zum Durchführen einer Gegenlaufwaschung zu der ersten Zuführeinrichtung 22a als Waschfluid 20 zugeleitet wird. Diese Anordnung einer Gegenlaufwaschung ist insbesondere für ein besonders effizientes Reinigen der Feststoffpartikel von verbliebener Mutterflüssigkeit zweckmäßig, wobei der entfeuchtete Filterkuchen 5 in einem Entnahmeabschnitt 15 von dem Filtermedium 14 in grundsätzlich bekannter Weise abgenommen wird.

Aus der Suspensionsmenge ist die Flüssigkeits- und Feststoffmenge bekannt (aus Volumenstrom und Feststoffkonzentration). Ein Teil der Flüssigkeit (Porenflüssigkeit als Sättigung) verbleibt im Filterkuchen 5. Dieser Teil kann durch indirekte Messung ausreichend genau ermittelt werden. Wenn also der auftauchende Kuchen die Sättigung 100% hat, wird der Filterkuchen 5 mittels einer ersten Vorentfeuchtung auf eine geringere Sättigung von weniger als 100% überführt. Dabei ist es unerheblich, ob Filtrat über mehrere oder eine gemeinsame Filtratsammelleitung abgeführt wird, da zur Bilanzierung nur der gemeinsame Volumenstrom der Mutterflüssigkeit benötig wird. Weiterhin ist es bei der Messung der Flüssigkeitsdifferenz hilfreich, wenn der Filterkuchen 5 viel Porenfiltrat enthält, also ausreichend dick ist und/oder eine höhere Porosität aufweist. Dies erhöht die Zuverlässigkeit der Messung.

Bei der Vorrichtung 10 nach Fig. 1 ist nach der jeweiligen Waschung in der Regel eine gewisse Untersättigung des Filterkuchens 5 erwünscht. Diese Untersättigung kann je nach Grad zu einem Gasdurchsatz führen. Bei diesem Gasdurchsatz kann zusätzlich die Entleerung der Filterzelle und der internen Filtratverrohrung begünstigt werden. Ein Gasdurchsatz ist jedoch lediglich eine optionale Verfahrensvariante und in Fig. 1 nicht dargestellt.

Es kann sein, dass nicht in jeder Waschzone ein Gasdurchsatz oder eine Porenuntersättigung erwünscht und eingestellt wird. Insbesondere nach der letzten Waschung kann für eine Kuchenabnahme eine Untersättigung unerwünscht sein.

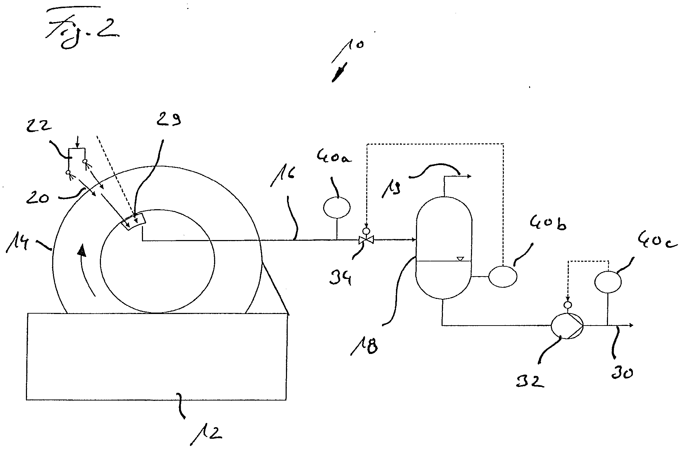

In Zusammenhang mit einer zweiten Vorrichtung 10 gemäß Fig. 2 wird eine mögliche Steuerung beziehungsweise Regelung des Waschvorgangs nach der Erfindung erläutert. Dabei weist die Vorrichtung 10 gemäß Fig. 2 entsprechend Fig. 1 einen Suspensionstrog 12 mit einem trommelförmigen Filtermedium 14 auf, wobei zur Vereinfachung lediglich ein einzelner Waschbereich mit einer Zuführeinrichtung 22 zum Aufsprühen von Waschfluid 20 dargestellt ist. Zudem ist gemäß Fig. 2 auch eine Zuführung von Gas 29 schematisch angedeutet, welches den nicht dargestellten Filterkuchen 5 auf dem Filtermedium 14 durchdringt.

Bei der Vorrichtung 10 gemäß Fig. 2 wird Waschfiltrat 30 mittels einer Pumpe 32 über die Abführleitung 16 abgepumpt. In einem ersten Bereich ist eine erste Messeinrichtung 40a angeordnet, mit welcher der Druck in der Filtratleitung 16 und - bei einem bekannten Druck oberhalb des Filtermediums 14 - auch die Druckdifferenz am Filtermedium 14 bestimmt werden kann. Der Pumpe 32 ist ein Abscheider 18 vorgeschaltet, welcher zum Abscheiden von Gas aus dem Strom von Waschfiltrat 30 ausgebildet ist. Gas kann über einen Abzug 19 abgeführt werden. Das Waschfiltrat 30 in dem Abscheider 18 wird von der Pumpe 32 angesaugt. Mittels einer zweiten Messeinrichtung 40b kann ein Füllstand in dem Abscheider 18 festgestellt und überwacht werden. Eine Steuereinrichtung ist dabei so ausgebildet, dass eine zweite Messeinrichtung 40b mit einem steuerbaren Drosselventil 34, welches dem Abscheider 18 vorgeschaltet ist, in Wirkverbindung steht. Fällt der Füllstand in dem Abscheider 18, dann öffnet das Drosselventil 34 etwas, wobei die Druckdifferenz über dem Filterkuchen ansteigt. Dies erfolgt, weil die Druckdifferenz über das Drosselventil 34 abnimmt beziehungsweise weil die gesamte Druckdifferenz gleich bleibt und sich in Richtung des Filterkuchens verschiebt. Hieraus resultiert eine stärkere Untersättigung des Filterkuchens auf dem Filtermedium 14. Steigt der Füllstand hingegen, dann schließt das Drosselventil 34 etwas. Entsprechend sinkt die Druckdifferenz am Filterkuchen auf dem Filtermedium 14, wodurch sich eine Untersättigung des Filterkuchens verringert.

Weiterhin ist der Pumpe 32 eine dritte Messeinrichtung 40c zugeordnet, welche eine Volumenmesseinrichtung oder ein Durchströmungsmesser sein kann. Dabei ist die Steuereinrichtung so ausgebildet, dass die Pumpe 32 so angesteuert wird, dass ein möglichst konstanter Strom an Waschfiltrat 30 erzeugt wird.

Wenn vor der Waschung hinreichend genau eine Sättigung des Filterkuchens ermittelt wurde, kann eine hinreichend genaue Regelung und Kontrolle einer Porenentleerung im Filterkuchen erreicht werden. Dabei wird eine definierte und bestimmbare Menge an Waschfluid auf den Filterkuchen geleitet. Die gegebenenfalls untersättigten Poren im Filterkuchen füllen sich zumindest teilweise und Waschfluid dringt teils durch den Filterkuchen hindurch. Ebenfalls kann eine nachfolgende erneute Porenentleerung erfolgen. Insgesamt ergibt sich die Menge an Waschfiltrat 30 aus der Menge an Waschfluid 20 und aus der Menge an Porenfiltrat oder Mutterflüssigkeit. Letzteres ergibt sich aus einer Differenz der Sättigung des Filterkuchens vor und nach der Waschung. Die Differenz der Sättigung könnte null, positiv oder negativ sein. Da die erforderlichen Größen bekannt sind, das heißt die Sättigung des Filterkuchens vor der Waschung, die aus dem Feststoffdurchsatz bekannte maximale Menge an Mutterflüssigkeit und die aufgegebene Menge an Waschfluid 20, kann die gewünschte Menge an Waschfiltrat 30 als Soll- oder Regelgröße festgelegt beziehungsweise ermittelt werden.

Im Ergebnis kann ein gewünschter Strom an Waschfiltrat 30 über die Regelung der Druckdifferenz am Filterkuchen am Filtermedium 14 eingestellt werden. Da alle Regelungen und Messungen auch geringfügigen Fehlern unterliegen, kann vorzugsweise im Hintergrund als zweite Kontrollgröße die gesamte Bilanz aller eingehenden und ausgehenden Flüssigkeitsströme aus allen Waschbereichen zusätzlich überwacht und abgeglichen werden.

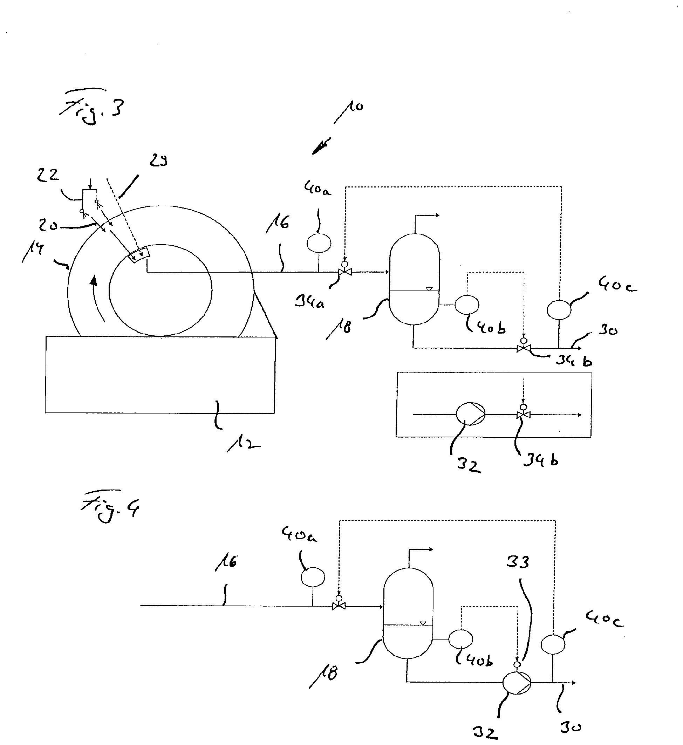

Gemäß Fig. 3 kann eine Regelung des Stromes am Waschfiltrat 30 auch auf eine andere Weise erfolgen. Dabei ist eine dritte Messeinrichtung 40c, welche zur Messung eines Volumenstroms oder einer Menge an Waschfiltrat 30 ausgebildet ist, zur Steuerung des einleitenden Drosselventils 34 ausgebildet. Durch entsprechende Ansteuerung des Drosselventils 34a kann der Volumenstrom an Waschfiltrat 30 erhöht oder verringert werden. Zur Regelung des Füllstandes im Abscheider 18 kann alternativ zu der Anordnung von Fig. 2 die zweite Messeinrichtung 40b, welche einen Füllstand ermittelt, ein zweites Drosselventil 34b am Ausgang des Abscheiders 18 ansteuern. Durch entsprechendes Öffnen und Schließen des zweiten Drosselventils 34b kann eine Erhöhung oder ein Absenken des Flüssigkeitsstandes im Abscheider 18 bewirkt werden. Die weiteren Komponenten der Ausgestaltung von Fig. 3 entsprechen denen von Fig. 2, wobei bei Vorliegen einer ausreichenden Druckdifferenz auf eine geregelte Pumpe 32 verzichtet werden kann.

Alternativ kann, wie in dem Kasten in Fig. 3 dargestellt, zum Abführen des Waschfiltrats 30 auch eine ungeregelte Pumpe 32 mit einer Festdrehzahl vorgesehen sein, wobei eine Regelung der Flüssigkeitsmenge dann über das zweite nachgeschaltete Drosselventil 34b durch die Steuereinrichtung erfolgt.

Gemäß der alternativen Steuereinrichtung nach Fig. 4 kann eine Regelung des Füllstandes im Abscheider 18 mittels der zweiten Messeinrichtung 40b, welche einen Füllstand ermittelt, auch dadurch bewirkt werden, dass die zweite Messeinrichtung 40b unmittelbar auf eine geregelte Pumpe 32 mit einem Steuerelement 33 einwirkt. Wie auch bei den weiteren Ausführungsformen können die nicht näher beschriebenen Komponenten der Vorrichtung 10 entsprechend den vorausgehenden Ausführungen ausgebildet sein.

Bei diesen Ausführungsvarianten geht es darum, dass ein Soll-Strom an Waschfiltrat 30 durch Berechnung bekannt ist und durch Vergleich des anfallenden Ist-Stroms an Waschfiltrat 30 beziehungsweise eines Füllstandes eine regelnde Maßnahme durch die Steuereinrichtung durchgeführt werden kann. Die Regelung des Stroms an Waschfiltrat 30 kann weiter mittels der Druckdifferenz über das erste einstellbare Drosselventil 34 erfolgen.

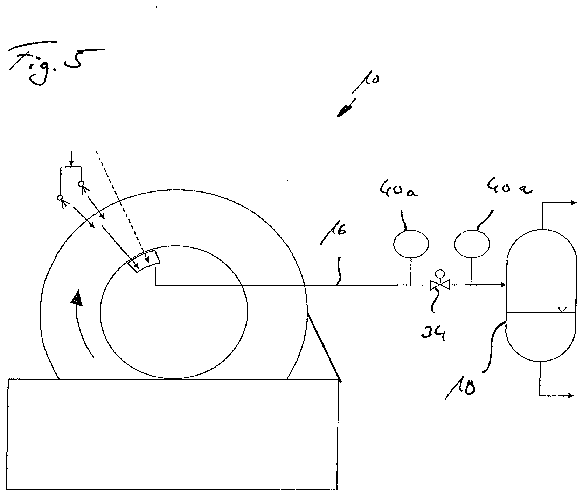

Gemäß Fig. 5 ist eine weitere Ausführungsform der erfindungsgemäßen Vorrichtung 10 dargestellt, wobei an dem Drosselventil 34 an der Filtratleitung 16 eine Druckmesseinrichtung als erste Messeinrichtung 40a vor- und nachgeschaltet ist.

Wenn ein Gasanteil im Waschfiltrat 30 zunimmt, dann nimmt in der Regel auch die Fließgeschwindigkeit deutlich zu. Mit einem bekannten KV-Wert des Ventils, dies entspricht dem Druckverlustbeiwert beziehungsweise einem Durchströmungswiderstand, kann die Menge an Waschfiltrat 30 geregelt werden. Bei einem Gasdurchbruch durch den Filterkuchen wird ein Druckverlust an dem Drosselventil 34 - bei gleicher Menge an Waschfiltrat 30 - sprunghaft ansteigen, das heißt vor dem Drosselventil 34 steigt der Druck an. In diesem Fall kann über die Steuereinrichtung das Drosselventil 34 vor dem Abscheider 18 wieder leicht geschlossen werden, damit der Gasdurchsatz und somit die Druckdifferenz am Filterkuchen auf dem Filtermedium 14 verringert wird. Somit kann eine Druckdifferenz an dem Drosselventil 34, welche über die zwei Messeinrichtungen 40a bestimmt wird, als eigentliche Regelgröße zum Ansteuern des Drosselventils 34 verwendet werden, wenn bei der Waschung ein Durchsatz von Gas 29 gezielt eingestellt und somit zu erwarten ist.

Es ist anzumerken, dass der Druckanstieg aufgrund eines Gasdurchsatzes auch zum Abgleich der berechneten Untersättigung der Poren im Filterkuchen gemäß den zuvor beschriebenen Lösungen genutzt werden kann. Es kann also zusätzlich zur Bilanzierung der Mengenströme auch ein Gasdurchsatz erfasst werden.

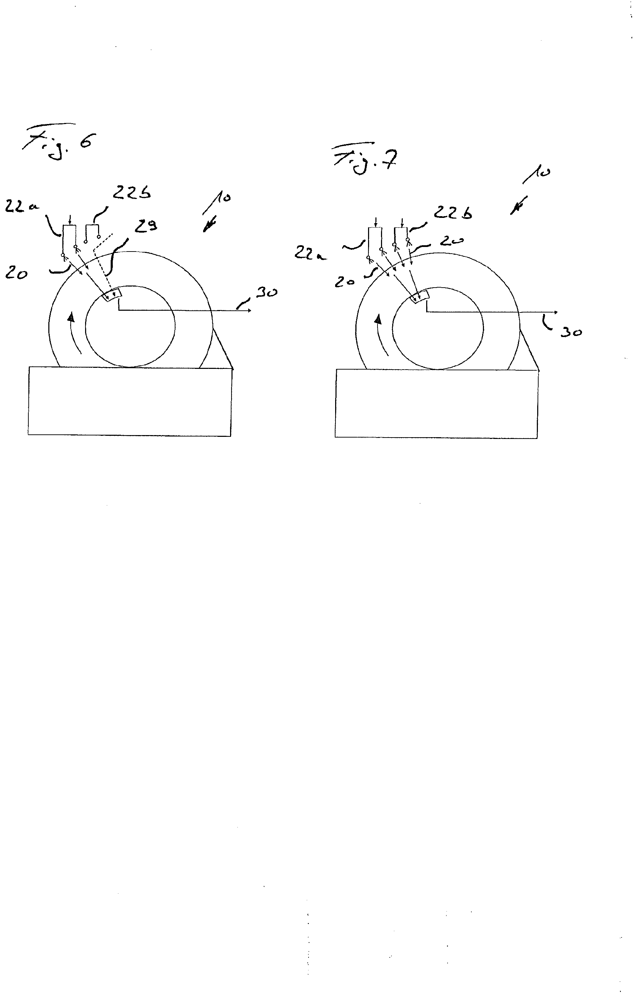

Eine weitere Ausgestaltung der Erfindung wird in Zusammenhang mit den Figuren 6 und 7 erläutert. Diese weitere Ausgestaltung betrifft die Möglichkeit einer Zuschaltung von zusätzlichen Zuführeinrichtungen 22, wobei zur Veranschaulichung lediglich eine erste Zuführeinrichtung 22a und eine zweite Zuführeinrichtung 22b dargestellt sind. Es können jedoch nahezu beliebig viele weitere Zuführeinrichtungen 22 vorgesehen werden. Diese Ausgestaltung kann alternativ oder insbesondere in Ergänzung zu den zuvor beschriebenen Ausführungen einer erfindungsgemäßen Vorrichtung 10 zum Einsatz kommen.

Dabei kann eine Waschung des Filterkuchens zunächst mit einer ersten Zuführeinrichtung 22a erfolgen, durch welche Waschfluid 20 auf den Filterkuchen aufgesprüht wird. Mindestens eine weitere Zuführeinrichtung 22b ist dabei noch nicht eingeschaltet. Wird bei der Waschung ein zu hoher Durchsatz an Gas 29 festgestellt, etwa durch die Anordnung gemäß Fig. 5, kann zur Verringerung des Stromes an Gas 29 die weitere Zuführeinrichtung 22b für Waschfluid 20 aktiviert werden, was in Fig. 7 dargestellt ist. Das flüssige Waschfluid 20 hat eine höhere Viskosität als das Gas 29. Das Waschfluid 20 wirkt somit im Filterkuchen wie eine Bremse auf den Volumenstrom des Gases 29. Eine breitere Verteilung des Waschfluides 20 verhindert einen übermäßigen oder frühzeitigen Durchsatz von Gas 29. Dabei ist verständlich, dass bei einer weiterhin gleichen Menge an Waschfluid, die auf eine größere Fläche aufgebracht wird, ein Einströmen von Gas 29 auf einen weiteren Bereich erfolgt. Aufgrund des parallel auftretenden Stroms an Waschfluid 20 wird ein Strom an Gas 29 jedoch dennoch gebremst oder behindert.

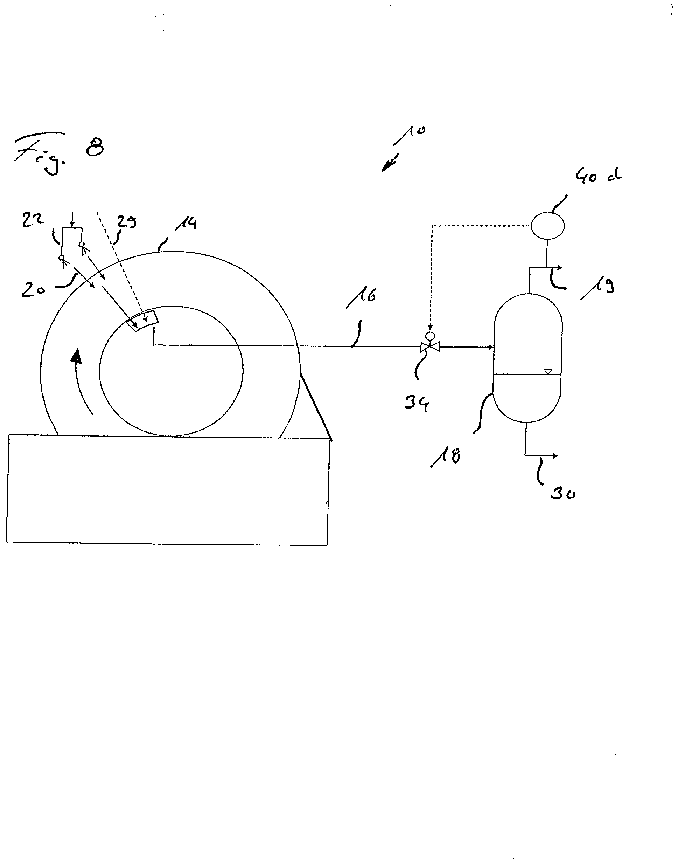

Gemäß Fig. 8 ist eine weitere Ausführungsvariante der Vorrichtung 10 zur Messung des Durchsatzes an Gas 29 dargestellt. Dabei kann an dem Abscheider 18 an der Abführleitung 16 das über den Abzug 19 abgeführte Gas mittels einer vierten Messeinrichtung 40d erfasst werden. Insbesondere kann die vierte Messeinrichtung 40d als ein Volumenmesser oder ein Strömungsmesser zum Bestimmen des Gasstromes ausgebildet sein. Die vierte Messeinrichtung 40d steht mit dem verstellbaren Drosselventil 34 in Verbindung, um über dieses die Druckdifferenz am Filtermedium 14 einzustellen. Durch entsprechende Ansteuerung des Drosselventils 34 kann so eine Erhöhung oder Verringerung des Durchsatzes von Gas 29 geregelt werden.

Auch diese Ausgestaltung kann insbesondere in Kombination mit einer der zuvor beschriebenen Vorrichtungen 10 zum Einsatz kommen.

Die beschriebenen Ausführungen einer Vorrichtung 10 basieren auf dem Kerngedanken einer kontrollierten Waschung eines Filterkuchens auf dem Filtermedium 14. Hierzu können Eigenschaften des Waschfiltrats 30 herangezogen werden, um gezielt eine Durchströmung von Waschfluid 20 durch den Filterkuchen auf dem Filtermedium 14 sicherzustellen. Die Mittel, um diese gezielte Waschung mit oder ohne Änderung einer Kuchenrestfeuchte, also einer Sättigung des Filterkuchens, zu bewerkstelligen, ist im Kernpunkt die Druckdifferenz. Die Druckdifferenz steuert, dass die vorhandene Waschzeit ausreicht, um das Waschfluid 20 durch den Filterkuchen zu leiten und gegebenenfalls auch einen Gasdurchsatz zu erzwingen oder zu begrenzen.

Bevorzugt ist es dabei, dass der Filterkuchen auf dem Filtermedium 14 eine bestimmte Dicke aufweist, welche vorzugsweise größer als 40 mm ist. Diese Mindestkuchendicke stellt eine ausreichende Porenfiltratmenge sicher, damit diese groß genug ist, dass sie auch messtechnisch mit ausreichender Genauigkeit erfasst werden kann.

Bevorzugt ist es weiterhin, dass der Filterkuchen bei der anliegenden Druckdifferenz tatsächlich eine Porenentleerung erfahren kann. Der kapillare Eintrittsdruck des Filterkuchens sollte dabei kleiner als die anliegende Druckdifferenz sein, also zum Beispiel kleiner als 0,5 bar, was grundsätzlich für alle Partikelschichten zutrifft, die auf einem kontinuierlichen Filter mit größerer Kuchenstärke anfiltriert werden können.

## Patentansprüche

1. Verfahren zum Waschen eines Filterkuchens (5) mit einem Trommelfilter auf einem Filtermedium (14), an welchem der Filterkuchen aus einer Suspension anfiltriert wird, wobei der Filterkuchen (5) ein Haufwerk aus Feststoffpartikeln mit verbliebener Mutterflüssigkeit bildet, und zum Waschen zumindest ein Bereich des Filterkuchens (5) auf einer Oberseite, welche von dem Filtermedium (14) abgewandt ist, mit einem Waschfluid (20) beaufschlagt wird, welches aufgrund einer anliegenden Druckdifferenz den Filterkuchen (5) von der Oberseite zum Filtermedium (14) hin wandert und dabei verbliebene Mutterflüssigkeit zum Filtermedium (14) hin austreibt und an einer Filtratseite hinter dem Filtermedium (14) als Waschfiltrat (30) abströmt,
wobei eine Steuereinrichtung zum geregelten Steuern des Waschens abhängig von dem abströmenden Waschfiltrat (30) eingesetzt wird, zu welchem mittels mindestens einer Messeinrichtung (40) mindestens eine Messgröße als Regelgröße für ein geregeltes Waschen erfasst wird,
wobei abhängig von der gemessenen Regelgröße des Waschfiltrats (30) durch die Steuereinrichtung mindestens ein Waschparameter als Führungsgröße geändert wird,
**dadurch gekennzeichnet,**
**dass** das Filtermedium (14) umlaufend angetrieben und ein kontinuierlicher Filtrations- und Waschvorgang durchgeführt werden,
**dass** der Waschbereich in mehrere voneinander getrennte Abschnitte unterteilt und in einem druckdichten Gehäuse angeordnet ist,
**dass** beim Waschen als Regelgröße durch die Messeinrichtung ein Volumenstrom des Waschfiltrats (30) und/oder ein Gasdurchschlag durch den Filterkuchen (5) erfasst werden, und
**dass** eine Steuerung einer Filterzellenfüllung beziehungsweise einer Filterzellenentleerung über eine Mengenbilanz erfolgt und
die Waschung so geregelt wird, dass eine Untersättigung des Filterkuchens erzielt wird,
wobei durch zuvor gemessene Filtrationsdaten ermittelt ist, wieviel Filtrat der Filterkuchen bei vollständiger Sättigung maximal fassen kann.

2. Verfahren nach Anspruch 1,
**dadurch gekennzeichnet,**
**dass** beim Waschen als Führungsgröße eine Druckdifferenz am Filtermedium (14) und/oder eine Zuführung von Waschfluid (20) vorgesehen werden.

3. Verfahren nach einem der Ansprüche 1 bis 2,
**dadurch gekennzeichnet,**
**dass** die Druckdifferenz am Filtermedium (14) auf einer Oberseite und/oder einer Filtratseite eingestellt wird.

4. Verfahren nach einem der Ansprüche 1 bis 3,
**dadurch gekennzeichnet,**
**dass** als Führungsgröße zum Einstellen der Druckdifferenz eine Leistung einer Pumpe (22) zum Abfördern des Waschfiltrats (30) und/oder ein Drosselventil (34) an einer Abführleitung (16) für das Waschfiltrat (30) verstellt werden.

5. Verfahren nach einem der Ansprüche 1 bis 4,
**dadurch gekennzeichnet,**
**dass** das Waschen wiederholt an dem Filterkuchen (5) durchgeführt wird.

6. Verfahren nach Anspruch 5,
**dadurch gekennzeichnet,**
**dass** das wiederholte Waschen als ein Gegenlauf-Waschen durchgeführt wird, bei dem das Waschfiltrat (30) eines nachfolgenden Waschvorganges als ein Waschfluid (20) zum Durchführen des Waschens bei einem vorausgehenden Waschvorgang verwendet wird.

7. Vorrichtung zum Waschen eines Filterkuchens (5) auf einem Filtermedium (14), insbesondere nach einem Verfahren nach einem der Ansprüche 1 bis 6,
wobei der Filterkuchen (5) aus einer Suspension als ein Haufwerk aus Feststoffpartikeln mit verbliebener Mutterflüssigkeit an dem Filtermedium (14) anfiltriert ist und eine Zuführeinrichtung (22) zum Zuführen eines Waschfluides (20) zum Waschen zumindest eines Bereiches des Filterkuchens (5) auf einer Oberseite vorgesehen ist, welche von dem Filtermedium (14) abgewandt ist, wobei an dem Filtermedium (14) eine Druckdifferenz eingestellt ist, aufgrund welcher das Waschfluid (20) den Filterkuchen (5) von der Oberseite zum Filtermedium (14) hin durchwandert und dabei verbliebene Mutterflüssigkeit zum Filtermedium (14) hin austreibt und mittels einer Abführleitung (16) an einer Filtratseite hinter dem Filtermedium (14) Waschfiltrat (30) abführbar ist,
wobei eine Steuereinrichtung zum geregelten Steuern des Waschens abhängig von dem abströmenden Waschfiltrat (30) vorgesehen ist, wobei mittels mindestens einer Messeinrichtung (40) mindestens eine Messgröße als Regelgröße für ein geregeltes Waschen erfassbar und der Steuereinrichtung zuführbar ist, und
wobei die Steuereinrichtung ausgebildet ist, abhängig von der gemessenen Regelgröße des Waschfiltrats (30) mindestens einen Waschparameter als Führungsgröße zu ändern,
wobei die Vorrichtung (10) einen Trommelfilter aufweist und
**dadurch gekennzeichnet,**
**dass** das Filtermedium (14) umlaufend angetrieben ist und ein kontinuierlicher Filtrations- und Waschvorgang durchgeführt werden,
**dass** der Waschbereich in mehrere voneinander getrennte Abschnitte unterteilt und in einem druckdichten Gehäuse angeordnet ist,
**dass** beim Waschen als Regelgröße durch die Messeinrichtung ein Volumenstrom des Waschfiltrats (30) und/oder ein Gasdurchschlag durch den Filterkuchen (5) erfasst werden, und
**dass** die Steuereinrichtung derart ausgebildet ist, dass eine Steuerung einer Filterzellenfüllung beziehungsweise einer Filterzellenentleerung über eine Mengenbilanz erfolgt und
die Waschung so geregelt wird, dass eine Untersättigung des Filterkuchens erzielt wird,
wobei durch zuvor gemessene Filtrationsdaten ermittelt ist, wieviel Filtrat der Filterkuchen bei vollständiger Sättigung maximal fassen kann.

8. Vorrichtung nach Anspruch 7,
**dadurch gekennzeichnet,**
**dass** im druckdichten Gehäuse (11) ein Filtrationsbereich und der Waschbereich angeordnet sind.

## Claims

1. Method for washing a filter cake (5) with a drum filter on a filter medium (14), onto which the filter cake is filtered from a suspension, wherein the filter cake (5) forms an aggregate of solid particles with residual mother liquid and, for washing, at least one area of the filter cake (5) on an upper side facing away from the filter medium (14) is acted upon by a washing fluid (20) which, due to an applied pressure difference, traverses the filter cake (5) from the upper side towards the filter medium (14) and thereby expels residual mother liquid towards the filter medium (14) and flows out as washing filtrate (30) on a filtrate side behind the filter medium (14),
wherein a control means is used for the regulated control of the washing depending on the outflowing washing filtrate (30), for which at least one measured variable is detected by means of at least one measuring means (40) as regulating variable for regulated washing, and
wherein depending on the measured regulating variable of the washing filtrate (30) at least one washing parameter is changed as reference variable by the control means,
**characterized in that**
the filter medium (14) is driven in rotation and a continuous filtration and washing process is carried out,
**in that** a washing area is divided into several separate sections and arranged in a pressure-tight housing,
**in that** during washing a volume flow of the washing filtrate (30) and/or a gas breakthrough through the filter cake (5) are detected by the measuring means as regulating variable, and
**in that** a control of filter cell filling or filter cell emptying is carried out via a mass balance, and
**in that** the washing is regulated in such a way that an undersaturation of the filter cake is achieved,
wherein it is determined by previously measured filtration data, how much filtrate the filter cake can hold maximum at complete saturation.

2. Method according to claim 1,
**characterized in that**
during washing a pressure difference on the filter medium (14) and/or a supply of washing fluid (20) are provided as reference variable.

3. Method according to any one of claims 1 to 2,
**characterized in that**
the pressure difference on the filter medium (14) is set on an upper side and/or a filtrate side.

4. Method according to any one of claims 1 to 3,
**characterized in that**
as reference variable for setting the pressure difference a capacity of a pump (22) for conveying away the washing filtrate (30) and/or a throttle valve (34) on a discharge line (16) for the washing filtrate (30) are adjusted.

5. Method according to any one of claims 1 to 4,
**characterized in that**
the washing is carried out repeatedly on the filter cake (5).

6. Method according to claim 5,
**characterized in that**
the repeated washing is carried out as countercurrent washing, in which the washing filtrate (30) of a subsequent washing process is used as a washing fluid (20) to carry out the washing in a preceding washing process.

7. Device for washing a filter cake (5) on a filter medium (14), in particular pursuant to a method according to any one of claims 1 to 6,
wherein the filter cake (5) is filtered onto the filter medium (14) from a suspension as an aggregate of solid particles with residual mother liquid and a supply means (22) is provided for supplying a washing fluid (20) to wash at least one area of the filter cake (5) on an upper side facing away from the filter medium (14), wherein on the filter medium (14) a pressure difference is set, due to which the washing fluid (20) traverses the filter cake (5) from the upper side towards the filter medium (14) and thereby expels residual mother liquid towards the filter medium (14) and by means of a discharge line (16) washing filtrate (30) can be discharged on a filtrate side behind the filter medium (14),
wherein a control means is provided for the regulated control of the washing depending on the outflowing washing filtrate (30), wherein by means of at least one measuring means (40) at least one measured variable can be detected as regulating variable for regulated washing and can be forwarded to the control means, and
wherein depending on the measured regulating variable of the washing filtrate (30) the control means is designed to change at least one washing parameter as reference variable
wherein the device (10) comprises a drum filter, and
**characterized in that**
the filter medium (14) is driven in a circulating manner and a continuous filtration and washing process is carried out,
**in that** the washing area is divided into several separate sections and arranged in a pressure-tight housing,
**in that** during washing, a volume flow of the washing filtrate (30) and/or a gas breakthrough through the filter cake (5) are recorded as a controlled variable by the measuring device, and
**in that** the control device is designed in such a way that a control of a filter cell filling or a filter cell emptying takes place via a quantity balance and
the washing is regulated in such a way that an undersaturation of the filter cake is achieved,
wherein it is determined by previously measured filtration data how much filtrate the filter cake can hold maximum at complete saturation.

8. Device according to claim 7,
**characterized in that**
in the pressure-sealed housing (11) a filtration area and the washing area are arranged.

## Revendications

1. Procédé pour laver un gâteau de filtration (5) avec un filtre à tambour sur un milieu filtrant (14), sur lequel le gâteau de filtration est filtré à partir d'une suspension, le gâteau de filtration (5) formant un amas de particules solides avec du liquide mère restant, et pour le lavage, au moins une zone du gâteau de filtration (5) sur un côté supérieur qui est détourné du milieu filtrant (14) étant sollicitée avec un fluide de lavage (20) qui, en raison d'une différence de pression existante, fait migrer le gâteau de filtration (5) du côté supérieur vers le milieu filtrant (14) et expulse ainsi le liquide mère restant vers le milieu filtrant (14) et s'écoule sous forme de filtrat de lavage (30) sur un côté de filtrat derrière le milieu filtrant (14),
un appareil de commande étant utilisé pour commander de manière régulée le lavage en fonction du filtrat de lavage s'écoulant (30), pour lequel au moins une grandeur de mesure est détectée, au moyen d'au moins un appareil de mesure (40), en tant que grandeur de régulation pour un lavage régulé,
au moins un paramètre de lavage étant modifié en fonction de la grandeur de régulation mesurée du filtrat de lavage (30) par l'appareil de commande en tant que grandeur de référence,
**caractérisé en ce que**
le milieu filtrant (14) est entraîné de manière circulaire et un processus continu de filtration et de lavage est effectué,
**en ce que** la zone de lavage est divisée en plusieurs sections séparées les unes des autres et agencée dans un boîtier étanche à la pression,
**en ce que**, lors du lavage, un débit volumique du filtrat de lavage (30) et/ou un passage de gaz à travers le gâteau de filtration sont détectés par l'appareil de mesure en tant que grandeur de régulation (5), et
**en ce qu'**une commande d'un remplissage de la cellule de filtration ou d'une vidange de la cellule de filtration s'effectue par l'intermédiaire d'un bilan quantitatif et
le lavage est régulé de manière à obtenir une sous-saturation du gâteau de filtration,
la quantité maximale de filtrat que le gâteau de filtration peut contenir à saturation complète étant déterminée par de données de filtration mesurées au préalable.

2. Procédé selon la revendication 1,
**caractérisé en ce que**,
lors du lavage, une différence de pression au niveau du milieu filtrant (14) et/ou une amenée de fluide de lavage (20) sont prévues en tant que grandeur de référence.

3. Procédé selon l'une quelconque des revendications 1 à 2,
**caractérisé en ce que**
la différence de pression au niveau du milieu filtrant (14) est ajustée sur un côté supérieur et/ou un côté de filtrat.

4. Procédé selon l'une quelconque des revendications 1 à 3,
**caractérisé en ce qu'**
en tant que grandeur de référence pour ajuster la différence de pression, on règle une puissance d'une pompe (22) pour évacuer le filtrat de lavage (30) et/ou une soupape d'étranglement (34) sur une conduite d'évacuation (16) pour le filtrat de lavage (30).

5. Procédé selon une quelconque des revendications 1 à 4,
**caractérisé en ce que**
le lavage est effectué de manière répétée sur le gâteau de filtration (5).

6. Procédé selon la revendication 5,
**caractérisé en ce que**
le lavage répété est effectué sous la forme d'un lavage à contre-courant, dans lequel le filtrat de lavage (30) d'un processus de lavage suivant est utilisé en tant que fluide de lavage (20) pour effectuer le lavage lors d'un processus de lavage précédent.

7. Dispositif pour laver un gâteau de filtration (5) sur un milieu filtrant (14), notamment par un procédé selon l'une quelconque des revendications 1 à 6,
le gâteau de filtration (5) étant filtré à partir d'une suspension sous la forme d'un amas de particules solides avec du liquide mère restant sur le milieu filtrant (14) et un appareil d'amenée (22) étant prévu pour amener un fluide de lavage (20) afin de laver au moins une zone du gâteau de filtration (5) sur un côté supérieur qui est détourné du milieu filtrant (14), une différence de pression étant ajustée au niveau du milieu filtrant (14), en raison de laquelle le fluide de lavage (20) traverse le gâteau de filtration (5) du côté supérieur vers le milieu filtrant (14) et expulse ainsi le liquide mère restant vers le milieu filtrant (14) et le filtrat de lavage (30) peut être évacué au moyen d'une conduite d'évacuation (16) sur un côté de filtrat derrière le milieu filtrant (14),
un appareil de commande étant prévu pour commander de manière régulée le lavage en fonction du filtrat de lavage (30) s'écoulant, au moins une grandeur de mesure pouvant être détectée au moyen d'au moins un appareil de mesure (40) en tant que grandeur de régulation pour un lavage régulé et être amenée à l'appareil de commande, et l'appareil de commande étant réalisé pour modifier au moins un paramètre de lavage en tant que grandeur de référence en fonction de la grandeur de régulation mesurée du filtrat de lavage (30),
le dispositif (10) présentant un filtre à tambour et
**caractérisé en ce que**
le milieu filtrant (14) est entraîné de manière circulaire et un processus continu de filtration et de lavage est effectué,
**en ce que** la zone de lavage est divisée en plusieurs sections séparées les unes des autres et agencées dans un boîtier étanche à la pression,
**en ce que**, lors du lavage, un débit volumique du filtrat de lavage (30) et/ou un passage de gaz à travers le gâteau de filtration sont détectés par l'appareil de mesure (5) en tant que grandeur de régulation, et
**en ce que** l'appareil de commande est réalisé de telle sorte qu'une commande d'un remplissage de la cellule de filtration ou d'une vidange de la cellule de filtration s'effectue par l'intermédiaire d'un bilan quantitatif et
le lavage est régulé de manière à obtenir une sous-saturation du gâteau de filtration,
la quantité maximale de filtrat que le gâteau de filtration peut contenir à saturation complète étant déterminée à partir de données de filtration mesurées au préalable.

8. Dispositif selon la revendication 7,
**caractérisé en ce qu'**
une zone de filtration et la zone de lavage sont agencées dans le boîtier étanche à la pression (11).
